# EUROPEAN PATENT SPECIFICATION

(11) **EP 0 944 688 B1**
(45) Date of publication and mention of the grant of the patent: **14.11.2001**
(21) Application number: 97946092.0
(22) Date of filing: 03.12.1997
(51) Int. Cl.: C09K 5/04, C10M 171/00, C10M 169/04, C10M 105/38, C10M 145/34, C10M 145/36

(54) **REFRIGERATION OIL AND WORKING FLUID COMPOSITION FOR REFRIGERATING MACHINE**
GEFRIERÖL UND ARBEITSMITTELZUSAMMENSETZUNG FÜR KÄLTEMASCHINEN
HUILE INCONGELABLE ET COMPOSITION DE FLUIDE THERMODYNAMIQUE POUR MACHINE FRIGORIFIQUE

(30) Priority: 11.12.1996 JP 35213496
(43) Date of publication of application: 29.09.1999
(73) Proprietor: Kao Corporation, Chuo-Ku Tokyo 103 (JP)
(72) Inventor: OSHIMA, Yoshiaki, Kao Corp. Res. Lab., Wakayama-shi Wakayama 640 (JP); HAGIHARA, Toshiya, Kao Corp. Res. Lab., Wakayama-shi Wakayama 640 (JP); TOGASHI, Hiroyasu, Kao Corp. Res. Lab., Wakayama-shi Wakayama 640 (JP); KOBAYASHI, Yuichiro, Kao Corp. Res. Lab., Wakayama-shi Wakayama 640 (JP); TAIRA, Koji, Kao Corp. Res. Lab., Wakayama-shi Wakayama 640 (JP)
(74) Representative: HOFFMANN - EITLE
(86) International application number: JP9704431
(87) International publication number: WO9826024

(56) References cited:
- EP-A- 0 536 940
- US-A- 5 560 854
- DATABASE WPI Section Ch, Week 9311 Derwent Publications Ltd., London, GB; Class E19, AN 93-088907 XP002056453 & JP 05 032 985 A (KYOSEKI SEIHIN GIJUTSU KENKYU) , 9 February 1993 cited in the application
- DATABASE WPI Section Ch, Week 8209 Derwent Publications Ltd., London, GB; Class A97, AN 82-16628E XP002056455 & JP 57 012 097 A (SANYO CHEM IND LTD) , 21 January 1982
- DATABASE WPI Section Ch, Week 8315 Derwent Publications Ltd., London, GB; Class A25, AN 83-35911K XP002056454 & JP 58 038 793 A (SANYO CHEM IND LTD) , 7 March 1983
- DATABASE WPI Section Ch, Week 9621 Derwent Publications Ltd., London, GB; Class A14, AN 96-205841 XP002056466 & JP 08 073 880 A (IDEMITSU KOSAN CO LTD) , 19 March 1996 cited in the application

## Description

### TECHNICAL FIELD

The present invention relates to a refrigeration oil comprising an ester base oil and a particular ether compound, and to a working fluid composition for refrigerating machine comprising the above refrigeration oil and a hydrofluorocarbon.

### BACKGROUND ART

Recently, in order to protect the ozone layer, the use of chlorofluorocarbons (CFC) and hydrochlorofluorocarbons (HCFC) which have been used as refrigerants for refrigerators and automotive room air conditioners would be legally banned or legally regulated. Therefore, hydrofluorocarbons (HFC) have been used as substitute fluorocarbons. Since the substitute fluorocarbons have higher polarities than the CFC or the HCFC, they have poorer compatibility with a lubrication oils such as mineral oils generally employed as refrigeration oils and alkylbenzenes, which results in a two-phase separation at a low temperature. For the above reason, those having higher polarities, such as esters, ethers, carbonates, and the like, are recently more frequently used as refrigeration oils than the mineral oils or alkylbenzenes.

However, in the case where the above refrigeration oil more suitable for the substitute fluorocarbon refrigerants, there arise problems in a decrease in refrigeration efficiency owing to the adhered materials in a refrigeration cycle, and such problems did not take place in the conventional refrigeration oils. The adhered materials in the refrigeration cycle are presumably ascribed to deteriorated products of refrigeration oils by heat, air and water in a refrigeration cycle; various oils including mineral oils and hydrocarbon synthetic oils, such as drawing oils, cutting fluids, anticorrosive oils, press oils, and cleaning fluids, each of which may be used during production and assembly of a refrigerating machine, and the like.

Incidentally, regarding mixed oils of ester base oils and polyalkylene glycols, there have been reported to blend a particular polyalkylene glycol having excellent compatibility with a substitute fluorocarbon (Japanese Patent Laid-Open No. 5-32985), or to use a polyalkylene glycol as a viscosity adjusting agent (Japanese Patent Laid-Open No. 5-209181). However, no reports have been made so far to use a polyalkylene glycol in an invention of refrigeration oils for the purpose of inhibiting formation of adhered materials.

On the other hand, Japanese Patent Laid-Open No. 8-73880 discloses that a refrigeration oil containing an oxazoline compound serves to inhibit formation of adhered materials. However, the oxazoline compound itself has poor thermal stability, so that it is highly liable to increase adhered materials by deteriorating the refrigeration oils.

EP 0 536 940 A2 discloses a working fluid composition comprising a heat transfer fluid and a lubricant which is at least partially soluble in each component of the heat transfer fluid. The lubricants include polyoxyalkylene glycols and neopentyl polyol esters.

US 5 560 854 describes a working fluid composition comprising a refrigerant and a lubricant for the refrigerator, said lubricant comprising 100 parts by weight of a synthetic oil and 0.5 to 10.0 parts by weight of at least a benzotriazole derivative. The synthetic oil includes a polyoxyalkylene glycol, a modified polyoxyalkylene glycol, a carboxylic acid ester or a mixture thereof.

An object of the present invention is to provide a refrigeration oil for substitute fluorocarbon refrigerants having excellent inhibition of formation of adhered materials.

Another object of the present invention is to provide a working fluid composition for refrigerating machine containing the above refrigeration oil.

Still another object of the present invention is to provide a method for inhibiting formation of adhered materials in a refrigeration cycle using the refrigeration oil of the present invention.

Still another object of the present invention is to provide an agent for inhibiting formation of adhered materials in a refrigerating cycle.

These and other objects of the present invention will be apparent from the following description.

### DISCLOSURE OF INVENTION

As a result of intense research in view of the above problems, the present inventors have found that the refrigeration oil comprises an ester base oil and a particular ether compound, so that the effects of inhibiting formation of adhered materials in a refrigeration cycle, in such parts as capillary tubes can be remarkably improved. The present invention has been completed based upon this finding.

In sum, the present invention pertains to:
(1) A refrigeration oil having a volume resistivity at 25°C of not less than 1 × 10¹³ Ω•cm, comprising:
   (a) an ester base oil, and
   (b) a compound represented by the formula (1):

      R¹O(EO)ₘ(PO)ₙR² (1)

      wherein R¹ is a hydrocarbon group having 1 to 36 carbon atoms; R² is hydrogen atom, a hydrocarbon group having 1 to 36 carbon atoms, or an acyl group having 1 to 24 carbon atoms; EO is oxyethylene group; PO is oxypropylene group; and m is a number of from 0 to 50, and n is a number of from 0 to 50, with proviso that the sum of m and n is from 1 to 100,
   wherein the amount of (b) is 2 to 25 parts by weight, based on 100 parts by weight of (a);
(2) The refrigeration oil described in item (1) above, wherein a concentration of the compound represented by the formula (1) in the refrigeration oil is from 1 to 20% by weight;
(3) The refrigeration oil described in item (1) or item (2) above, wherein the ester base oil is formed between (i) a saturated, dihydric to hexahydric, aliphatic polyhydric alcohol having 2 to 10 carbon atoms and (ii) a linear or branched, saturated, aliphatic monocarboxylic acid having 2 to 9 carbon atoms or a derivative thereof;
(4) The refrigeration oil described in any one of items (1) to (3) above, wherein the ester base oil is formed between (i) a saturated, dihydric to tetrahydric, aliphatic polyhydric alcohol having 2 to 10 carbon atoms and (ii) a linear or branched, saturated, aliphatic monocarboxylic acid having 5 to 9 carbon atoms or a derivative thereof;
(5) The refrigeration oil described in any one of items (1) to (4) above, wherein R¹ is a hydrocarbon group having 1 to 14 carbon atoms; and R² is hydrogen atom or a hydrocarbon group having 1 to 14 carbon atoms;
(6) The refrigeration oil described in any one of items (1) to (5) above, wherein the amount of (b) is 2 to 5 parts by weight, based on 100 parts by weight of (a);
(7) A working fluid composition for refrigerating machine comprising the refrigeration oil as defined in any one of items (1) to (6) above and one or more hydrofluorocarbons;
(8) A method for inhibiting formation of an adhered material in a refrigeration cycle comprising using the refrigeration oils as defined in any one of items (1) to (6) above; and
(9) An agent for inhibiting formation of an adhered material in a refrigeration cycle comprising a compound represented by the formula (1) as an active ingredient:

   R¹O(EO)ₘ(PO)ₙR² (1)

   wherein R¹ is a hydrocarbon group having 1 to 36 carbon atoms; R² is hydrogen atom, a hydrocarbon group having 1 to 36 carbon atoms, or an acyl group having 1 to 24 carbon atoms; EO is oxyethylene group; PO is oxypropylene group; and m is a number of from 0 to 50, and n is a number of from 0 to 50, with proviso that the sum of m and n is from 1 to 100.

### BEST MODE FOR CARRYING OUT THE INVENTION

### 1-1. Ether Compounds

Ether compounds usable in the present invention may be a compound represented by the formula (1):

R₁O(EO)ₘ(PO)ₙR₂, (1)

wherein R₁ is a hydrocarbon group having 1 to 36 carbon atoms; R₂ is hydrogen atom, a hydrocarbon group having 1 to 36 carbon atoms, or an acyl group having 1 to 24 carbon atoms; EO is an oxyethylene group; PO is an oxypropylene group; and m is a number of from 0 to 50, and n is a number of from 0 to 50, the sum of m and n being from 1 to 100.

From the viewpoint of compatibility with hydrofluorocarbons, R₁ is a hydrocarbon group having 1 to 36 carbon atoms, preferably 1 to 24 carbon atoms, more preferably 1 to 18 carbon atoms, still more preferably 1 to 14 carbon atoms. From the viewpoint of compatibility with hydrofluorocarbons, R₂ is hydrogen atom, a hydrocarbon group having 1 to 36 carbon atoms, or an acyl group having 1 to 24 carbon atoms, and it is preferred that R₂ is a hydrogen atom, a hydrocarbon group having 1 to 24 carbon atoms, more preferably 1 to 18 carbon atoms, still more preferably 1 to 14 carbon atoms. The acyl group of R₂ preferably has 1 to 18 carbon atoms, more preferably 1 to 14 carbon atoms.

Also, from the viewpoints of electric insulating property, thermal stability, low-temperature flowability, and hygroscopic property, m is a number of from 0 to 50, preferably from 0 to 30, more preferably from 0 to 20, still more preferably from 0 to 10. From the viewpoints of electric insulating property and thermal stability, n is a number of from 0 to 50, preferably from 0 to 30, more preferably from 0 to 20, still more preferably from 0 to 10. Also, from the viewpoints of electric insulating property, thermal stability, hygroscopic property, and inhibition of formation of adhered materials, the sum of m and n is from 1 to 100, preferably from 1 to 60, more preferably from 1 to 40, still more preferably from 2 to 40, still more preferably from 2 to 30. Also, from the viewpoint of compatibility with hydrofluorocarbons, the ether compound has a melting point of preferably not more than 25°C, more preferably not more than 15°C, still more preferably not more than 0°C, still more preferably not more than -15°C, still more preferably not more than -25°C. Similarly, from the viewpoints of compatibility with hydrofluorocarbons and hygroscopic property, the ether compound has a molecular weight of preferably not more than 3,000, more preferably not more than 2,000, still more preferably not more than 1,500, still more preferably not more than 1,000.

From the viewpoint of electric insulating property, it is desired that the compound represented by the formula (1) usable in the present invention has volume resistivity at 25°C of not less than 1 × 10¹⁰ Ω•cm, preferably not less than 1 × 10¹¹ Ω•cm, more preferably not less than 1 × 10¹² Ω•cm, still more preferably not less than 1 × 10¹³ Ω•cm.

The compound represented by the formula (1) usable in the present invention has an acid value of which is not particularly limited. From the viewpoint of inhibiting corrosion of metal materials, a decrease in wear resistance, a decrease in thermal stability, and a decrease in electric insulating property, it is desired that the compound represented by the formula (1) has an acid value of not more than 1 mg KOH/g, preferably not more than 0.2 mg KOH/g, more preferably not more than 0.1 mg KOH/g, still more preferably not more than 0.05 mg KOH/g.

The compound represented by the formula (1) usable in the present invention has a hydroxyl value of which is not particularly limited. It is desired that the compound represented by the formula (1) has a hydroxyl value of from 0.1 to 500 mg KOH/g, preferably from 0.1 to 300 mg KOH/g, more preferably from 0.1 to 250 mg KOH/g, still more preferably from 0.1 to 200 mg KOH/g. From the viewpoint of wear resistance, it is desired that the compound has a hydroxyl value of not less than 0.1 mg KOH/g, and from the viewpoint of hygroscopic property, it is desired that the compound has a hydroxyl value of not more than 500 mg KOH/g.

It is desired that the compound represented by the formula (1) usable in the present invention has a low two-phase separation temperature with hydrofluorocarbons at a low temperature, preferably not more than 10°C, more preferably not more than 0°C, still more preferably not more than -10°C, still more preferably not more than -30°C, still more preferably not more than -50°C. Also, it is desired that the compound represented by the formula (1) has a high two-phase separation temperature with hydrofluorocarbons at high temperature, preferably not less than 30°C, more preferably not less than 40°C, still more preferably not less than 50°C, still more preferably not less than 60°C, still more preferably not less than 80°C.

The compound represented by the formula (1) usable in the present invention has a dynamic viscosity at 100°C of which is not particularly limited. From the viewpoints of compatibility with hydrofluorocarbons and lubricity, it is desired that the compound represented by the formula (1) has a dynamic viscosity at 100°C of from 1 to 100 mm²/s, preferably from 1 to 50 mm²/s, more preferably from 1 to 30 mm²/s, still more preferably from 1 to 20 mm²/s.

### 1-2. Base Oils

### (1) Ester Base Oils

The ester base oils usable in present invention are not particularly limited, as long as an ester has compatibility with hydrofluorocarbons and a pour point of not more than 0°C, and dissolves compounds having one or more oxyalkylene groups. Concrete examples of the esters are selected from the following compounds as preferred embodiments.
(a) An ester formed between (Component-1) a saturated, dihydric to hexahydric, aliphatic polyhydric alcohol having 2 to 10 carbon atoms and (Component-2) a linear or branched, saturated, aliphatic monocarboxylic acid having 2 to 9 carbon atoms or a derivative thereof.
(b) An ester formed between (Component-3) a linear or branched, saturated, aliphatic monohydric alcohol having 1 to 10 carbon atoms and (Component-4) a dicarboxylic to hexacarboxylic acid having 2 to 10 carbon atoms or a derivative thereof.
(c) An ester formed between (Component-1) a saturated, dihydric to hexahydric, aliphatic polyhydric alcohol having 2 to 10 carbon atoms, and a mixed acid of
   (Component-2) a linear or branched, saturated, aliphatic monocarboxylic acid having 2 to 9 carbon atoms or a derivative thereof and (Component-5) a linear or branched, saturated, aliphatic dicarboxylic acid having 2 to 10 carbon atoms or a derivative thereof.
(d) An ester formed between a mixed alcohol of
   (Component-1) a saturated, dihydric to hexahydric, aliphatic polyhydric alcohol having 2 to 10 carbon atoms and (Component-3) a linear or branched, saturated, aliphatic monohydric alcohol having 1 to 10 carbon atoms, and (Component-4) a dicarboxylic to hexacarboxylic acid having 2 to 10 carbon atoms or a derivative thereof.

### Component-1

The alcohols usable in Component-1 are dihydric to hexahydric alcohols, preferably dihydric to tetrahydric alcohols. From the viewpoint of obtaining a suitable viscosity, dihydric or higher polyhydric alcohols are preferred. From the viewpoints of avoiding to obtain too high a viscosity and providing compatibility with hydrofluorocarbons, the hexahydric alcohols or lower polyhydric alcohols are preferred. Also, the alcohol has 2 to 10 carbon atoms, preferably 2 to 6 carbon atoms. From the viewpoint of obtaining a suitable viscosity, The alcohols preferably have 2 or more carbon atoms, and from the viewpoints of avoiding to obtain too high a viscosity and providing compatibility with hydrofluorocarbons, the alcohol preferably have 10 or less carbon atoms. Also, from the viewpoint of heat resistance, it is desired that the alcohols usable in Component-1 do not have any unsaturated bonds.

Concrete examples of the alcohols usable in Component-1 include hindered alcohols, such as neopentyl glycol, trimethylolethane, trimethylolpropane, pentaerythritol, ditrimethylolpropane, and dipentaerythritol; and polyhydric alcohols, such as ethylene glycol, diethylene glycol, propylene glycol, dipropylene glycol, 1,3-propanediol, 1,4-butanediol, 1,6-hexanediol, glycerol, diglycerol, triglycerol, sorbitol, and mannitol. Among them, from the viewpoint of heat resistance, the hindered alcohols are particularly preferred.

### Component-2

The monocarboxylic acids usable in Component-2 each has 2 to 9 carbon atoms, preferably 5 to 9 carbon atoms. From the viewpoint of inhibiting formation of adhered materials, the carboxylic acid preferably has 2 or more carbon atoms, and from the viewpoint of compatibility with hydrofluorocarbons, the carboxylic acid preferably has 9 or less carbon atoms. From the viewpoints of compatibility with hydrofluorocarbons, hydrolysis resistance and thermal stability, a branched, saturated, aliphatic monocarboxylic acid is more preferred than a linear, saturated, aliphatic monocarboxylic acid. On the other hand, from the viewpoint of lubricity, a linear, saturated, aliphatic monocarboxylic acid is more preferred than a branched, saturated aliphatic monocarboxylic acid. In the present invention, the monocarboxylic acid usable in Component-2 is suitably selected depending upon its applications for refrigeration oils and working fluid compositions for refrigerating machine. Also, from the viewpoint of thermal stability, it is more desired that the monocarboxylic acids usable in Component-2 do not have unsaturated bonds.

Concrete examples of the monocarboxylic acids usable in Component-2 include valeric acid, isovaleric acid, 2-methylbutyric acid, caproic acid, enanthic acid, 2-ethylpentanoic acid, 2-methylhexanoic acid, caprylic acid, 2-ethylhexanoic acid, pelargonic acid, 3,5,5-trimethylhexanoic acid. Also, concrete examples of the derivatives of the monocarboxylic acids usable in Component-2 include lower alkyl esters whose alkyl moiety has 1 to 4 carbon atoms, such as methyl esters of the monocarboxylic acids and ethyl esters of the monocarboxylic acids, and acid anhydrides of the monocarboxylic acids.

### Component-3

The monohydric alcohols usable in Component-3 each has 1 to 10 carbon atoms, preferably 5 to 9 carbon atoms. From the viewpoint of compatibility with hydrofluorocarbons, the alcohol preferably has 10 or less carbon atoms. From the viewpoints of compatibility with hydrofluorocarbons and hydrolysis resistance, a branched, saturated alcohol is more preferred than a linear, saturated alcohol. From the viewpoint of lubricity, a linear, saturated alcohol is more preferred than a branched, saturated alcohol. In the present invention, the monohydric alcohol usable in Component-3 is suitably selected depending upon its applications for refrigeration oils and working fluid compositions for refrigerating machine. Also, from the viewpoint of thermal stability, it is more desired that the monohydric alcohols in
Component-3 do not have unsaturated bonds.

Concrete examples of the monohydric alcohols usable in Component-3 include methanol, ethanol, propanol, isopropanol, n-butanol, t-butanol, pentanol, 2-methylbutanol, 3-methylbutanol, 2,2-dimethylpropanol, hexanol, 2-methylpentanol, 2-ethylbutanol, 2,3-dimethylbutanol, heptanol, 2-methylhexanol, 3-methylhexanol, 5-methylhexanol, octanol, 2-ethylhexanol, nonanol, 3,5,5-trimethylhexanol, decyl alcohol, 2,4,6-trimethylheptanol. Among them, from the viewpoint of industrial availability, hexanol, 3-methylhexanol, heptanol, 2-ethylhexanol, octanol, 3,5,5-trimethylhexanol, and nonanol are preferred.

### Component-4

The carboxylic acids usable in Component-4 are dicarboxylic to hexacarboxylic acids, preferably dicarboxylic to tetracarboxylic acids, more preferably dicarboxylic to tricarboxylic acids. From the viewpoint of obtaining a suitable viscosity, dicarboxylic acids or higher polycarboxylic acids are preferred. From the viewpoints of avoiding to obtain too high a viscosity and providing compatibility with hydrofluorocarbons, hexacarboxylic acids or lower polycarboxylic acids are preferred. Also, the carboxylic acid preferably has 2 to 10 carbon atoms, more preferably 4 to 9 carbon atoms. From the viewpoint of compatibility with hydrofluorocarbons, the carboxylic acid preferably has 10 or less carbon atoms.

Concrete examples of the carboxylic acids usable in Component-4 include saturated, aliphatic dicarboxylic acids, such as succinic acid, glutaric acid, adipic acid, azelaic acid, and sebacic acid; saturated, aliphatic tricarboxylic acids, such as 1,2,3-propanetricarboxylic acid and β-methyltricarboxylic acid; and aromatic polycarboxylic acids, such as phthalic acid, terephthalic acid, trimellitic acid, and pyromellitic acid. Also, concrete examples of the derivatives of the carboxylic acids usable in Component-4 include lower alkyl esters whose alkyl moiety has 1 to 4 carbon atoms, such as methyl esters of the carboxylic acids and ethyl esters of carboxylic acids, and acid anhydrides of the carboxylic acids. Among them, from the viewpoint of industrial availability, glutaric acid and adipic acid are preferred.

### Component-5

The dicarboxylic acids usable in Component-5 each has 2 to 10 carbon atoms, preferably 4 to 6 carbon atoms. From the viewpoint of compatibility with hydrofluorocarbons, the dicarboxylic acid preferably has 10 or less carbon atoms. Also, from the viewpoint of thermal stability, it is desired that the dicarboxylic acids usable in Component-5 do not have any unsaturated bonds.

Concrete examples of the dicarboxylic acids usable in Component-5 include the linear or branched, saturated, aliphatic dicarboxylic acids listed above in the polycarboxylic acids usable in Component-4. Concrete examples of the derivatives of the dicarboxylic acids usable in Component-5 include lower alkyl ester whose alkyl moiety has 1 to 4 carbon atoms, such as methyl esters of the dicarboxylic acids and ethyl esters of the dicarboxylic acids, and acid anhydrides of the dicarboxylic acids.

In the esters usable in the present invention under items (a) to (d) above, from the viewpoints of balance of required properties of compatibility with hydrofluorocarbons, thermal stability, lubricity, and electric insulating property, the esters under item (a) are particularly preferred. Among the esters under item (a), hindered esters each formed between one or more dihydric to hexahydric, hindered alcohols each having 2 to 10 carbon atoms as a polyhydric alcohol and one or more saturated, aliphatic monocarboxylic acids each having 5 to 9 carbon atoms as a monocarboxylic acid are particularly preferred.

The polyhydric alcohols include neopentyl glycol, trimethylolethane, trimethylolpropane, pentaerythritol, ditrimethylolpropane, dipentaerithritol. Concrete examples of the monocarboxylic acids include valeric acid, isovaleric acid, 2-methylbutyric acid, caproic acid, enanthic acid, 2-ethylpentanoic acid, 2-methylhexanoic acid, caprylic acid, 2-ethylhexanoic acid, pelargonic acid, 3,5,5-trimethylhexanoic acid.

Concrete examples of the preferred esters under item (a) include an ester formed between neopentyl glycol and 3,5,5-trimethylhexanoic acid; an ester formed between neopentyl glycol and 2-ethylhexanoic acid; an ester formed between trimethylolpropane and 3,5,5-trimethylhexanoic acid; an ester formed between trimethylolpropane and a mixed acid of 2-methylhexanoic acid, 2-ethylpentanoic acid, and 3,5,5-trimethylhexanoic acid; an ester formed between trimethylolpropane and a mixed acid of
2-methylhexanoic acid, 2-ethylpentanoic acid, 2-ethylhexanoic acid, and 3,5,5-trimethylhexanoic acid; an ester formed between trimethylolpropane and 2-ethylhexanoic acid; an ester formed between trimethylolpropane and a mixed acid of 2-methylhexanoic acid, 2-ethylpentanoic acid, and 2-ethylhexanoic acid; an ester formed between pentaerythritol and a mixed acid of valeric acid and 3,5,5-trimethylhexanoic acid; an ester formed between pentaerythritol and a mixed acid of valeric acid, isovaleric acid, and 3,5,5-trimethylhexanoic acid; an ester formed between pentaerythritol and a mixed acid of enanthic acid and 3,5,5-trimethylhexanoic acid; an ester formed between pentaerythritol and a mixed acid of 2-ethylhexanoic acid and 3,5,5-trimethylhexanoic acid; an ester formed between pentaerythritol and a mixed acid of 2-methylhexanoic acid, 2-ethylpentanoic acid, and 2-ethylhexanoic acid; an ester formed between pentaerythritol and a mixed acid of caprylic acid and 3,5,5-trimethylhexanoic acid; an ester formed between pentaerythritol and a mixed acid of 2-methylhexanoic acid, 2-ethylpentanoic acid, 2-ethylhexanoic acid, and 3,5,5-trimethylhexanoic acid; an ester formed between pentaerythritol and 2-ethylhexanoic acid.

The esters usable in the present invention can be obtained by conventionally known esterification reaction and transesterification reaction using each components mentioned above.

In other words, the esters under items (a) to (d) can be obtained by conventionally known esterification reaction and transesterification reaction using components mentioned below:
Ester (a): Formed between (Component-1) one or more alcohols and (Component-2) one or more carboxylic acids and derivatives thereof;
Ester (b): Formed between (Component-3) one or more alcohols and (Component-4) one or more carboxylic acids and derivatives thereof;
Ester (c): Formed between (Component-1) one or more alcohols and a mixed carboxylic acid of (Component-2) one or more carboxylic acids and derivatives thereof and (Component-5) one or more carboxylic acids and derivatives thereof;
Ester (d): Formed between a mixed alcohol of (Component-1) one or more alcohols and (Component-3) one or'more alcohols and (Component-4) one or more carboxylic acids or derivatives thereof.

The acid values of the esters usable in the present invention obtained as above are not particularly limited. From the viewpoint of inhibiting corrosion of metal materials, a decrease in wear resistance, a decrease in thermal stability, and a decrease in electric insulating property, it is desired that the ester has an acid value of not more than 1 mg KOH/g, preferably not more than 0.2 mg KOH/g, more preferably not more than 0.1 mg KOH/g, still more preferably not more than 0.05 mg KOH/g.

The hydroxyl values of the esters usable in the present invention are not particularly limited. The ester has a hydroxyl value of preferably from 0.1 to 50 mg KOH/g, more preferably from 0.1 to 30 mg KOH/g, still more preferably from 0.1 to 20 mg KOH/g, still more preferably from 0.1 to 10 mg KOH/g. From the viewpoint of wear resistance, the ester has a hydroxyl value of preferably not less than 0.1 mg KOH/g, and from the viewpoint of hygroscopic property, the ester has a hydroxyl value of preferably not more than 50 mg KOH/g.

The iodine values (I g/100 g) of the esters usable in the present invention are not particularly limited. From the viewpoint of thermal oxidation stability of the resulting refrigeration oils, the ester has an iodine value of preferably not more than 10, more preferably not more than 5, still more preferably not more than 3, still more preferably not more than 1.

It is desired that the two-phase separation temperature of the ester usable in the present invention with hydrofluorocarbons at low temperature is low, preferably not more than 10°C, more preferably not more than 0°C, still more preferably not more than -10°C, still more preferably not more than -30°C, still more preferably not more than -50°C. Also, it is desired that the two-phase separation temperature with hydrofluorocarbons at high temperature is high, preferably not less than 30°C, more preferably not less than 40°C, still more preferably not less than 50°C, still more preferably not less than 60°C, still more preferably not less than 80°C.

The dynamic viscosity at 40°C of the esters usable in the present invention is not particularly limited. From the viewpoints of compatibility with hydrofluorocarbons and lubricity, the ester has a dynamic viscosity at 40°C of preferably from 1 to 200 mm²/s, more preferably from 1 to 150 mm²/s, still more preferably from 5 to 100 mm²/s, still more preferably from 5 to 75 mm²/s. The dynamic viscosity at 100°C of the esters usable in the present invention is not particularly limited. Also, from the viewpoints of compatibility with hydrofluorocarbons and lubricity, the ester has a dynamic viscosity at 100°C of preferably from 1 to 100 mm²/s, more preferably from 1 to 50 mm²/s, still more preferably from 1 to 30 mm²/s, still more preferably from 1 to 15 mm²/s.

### (2) Mixed Oils

The ester base oils usable in the present invention may be further contain in an amount so as not to impair compatibility with hydrofluorocarbons mineral oils, and synthetic oils, such as poly α-olefins, alkylbenzenes, esters other than those specified in the present invention, polyalkylene glycols other than those defined as the compounds represented by the formula (1), carbonates, perfluoropolyethers, and phosphoric esters. Concrete examples of the synthetic oils are set forth at p.p.180 to 224 of "New Edition of Physical Chemistry of Lubrication" (published by Saiwai Shobo, 1978).

### 1-3. Amounts of Ester Base Oil and Compound Represented by the Formula (1)

From the viewpoint of inhibiting formation of adhered materials, it is desired that the amounts of the ester base oil and the compound represented by the formula (1) are as follows. The amounts of the ester base oil and the compound represented by the formula (1) are such that the concentration of the compound represented by the formula (1) is not less than the critical micelle concentration, and that the amount is large enough to give satisfactory performance in the basic properties for refrigeration oils, including dynamic viscosity, volume resistivity, compatibility with hydrofluorocarbons. From the viewpoints of inhibiting formation of adhered materials and volume resistivity, the compound represented by the formula (1) is preferably from 2 to 25 parts by weight, more preferably from 2 to 20 parts by weight, still more preferably from 2 to 15 parts by weight, still more preferably 2 to 12 parts by weight, still more preferably 2 to 10 parts by weight, still more preferably 2 to 5 parts by weight, based on 100 parts by weight of ester base oil.

Also, the concentration of the compound represented by the formula (1) in refrigeration oils is preferably from 1 to 20% by weight, more preferably from 1 to 15% by weight, still more preferably from 1 to 10% by weight, still more preferably from 1 to 5% by weight.

### 1-4. Optional Additives

The refrigeration oils usable in the present invention may further contain conventional optional additives, such as epoxy compounds, acetal or ketal compounds, carbodiimide compounds, conventionally each acting to remove water or acids used; and antioxidants, extreme pressure additives, oiliness improvers, defoaming agents, cleaning dispersants, anticorrosive agents, anti-emulsifiers, viscosity index improvers, metal deactivators, agents for depressing pour points.

### 1-5. Properties of Refrigeration Oil

From the viewpoint of electric insulating property, the refrigeration oils of the present invention has a volume resistivity at 25°C of preferably not less than 1 × 10¹³ Ω•cm. The volume resistivity at 25°C of the refrigeration oils is preferably not less than 1 × 10¹³ Ω•cm for practical purpose, in order to inhibit a large amount of electric current leakages. The volume resistivity in the present invention is measured by a method according to JIS C2101 in a thermostat (manufactured by Nagano Science Corporation) set at 25°C. In the above measurement, an electrode cell for liquids "ELECTRODE (TYPE) OBE-2" (manufactured by Soken Electric Corporation) and a resistance meter "R8340A" (manufactured by Advantest) were employed.

### 2. Working Fluid Compositions for Refrigerating Machine

### 2-1. Hydrofluorocarbons (HFC)

The hydrofluorocarbons (HFC) usable herein are not particularly limited, as long as they are conventionally used ones constituting a working fluid composition for refrigeration machine. Preferred examples thereof include difluoromethane (HFC32), 1,1-difluoroethane (HFC152a), 1,1,1-trifluoroethane (HFC143a), 1,1,1,2-tetrafluoroethane (HFC134a), 1,1,2,2-tetrafluoroethane (HFC134), pentafluoroethane (HFC125), with particular preference given to difluoromethane, pentafluoroethane, 1,1,1,2-tetrafluoroethane, and 1,1,1-trifluoroethane. These hydrofluorocarbons may be used alone, or in combination of two or more members.

In the case where the working fluid compositions for refrigerating machine are used for refrigerator, 1,1,1,2-tetrafluoroethane (HFC134a) is preferably used. In the case where the working fluid compositions for refrigeration machine are used for air conditioners and industrial refrigerating machines, from the viewpoint of refrigerating efficiency, hydrofluorocarbons containing difluoromethane (HFC32) are preferably used. More preferably, a mixture of difluoromethane, pentafluoroethane, and 1,1,1,2-tetrafluoroethane; a mixture of difluoromethane and pentafluoroethane; or a mixture of difluoromethane and 1,1,1,2-tetrafluoroethane may be used. A still more preferred example of the hydrofluorocarbons, though not limited by the weight compositional ratios, include a hydrofluorocarbon comprising 23% by weight of difluoromethane, 25% by weight of pentafluoroethane, and 52% by weight of 1,1,1,2-tetrafluoroethane; or a hydrofluorocarbon comprising 40 to 60% by weight of difluoromethane and 60 to 40% by weight of pentafluoroethane; or a hydrofluorocarbon comprising 20 to 40% by weight of difluoromethane and 80 to 60% by weight of 1,1,1,2-tetrafluoroethane.

### 2-2. Mixing Ratio of Hydrofluorocarbon (HFC) and Refrigeration Oil

In the working fluid compositions for refrigerating machine of the present invention including a hydrofluorocarbon (HFC), the mixing ratio of the refrigeration oils to the hydrofluorocarbons is not particularly limited. The preferred mixing ratio of the refrigeration oils to the hydrofluorocarbons is from 1:50 to 20:1 (weight ratio), more preferably from 1:10 to 5:1 (weight ratio). From the viewpoint of obtaining sufficient refrigerating capacity, the weight ratio of the refrigeration oils to the hydrofluorocarbons is preferably such that a larger proportion of the hydrofluorocarbons is present in the composition than the weight ratio of the refrigeration oils to the hydrofluorocarbons of 20:1. And from the viewpoint of preferring the viscosity of the working fluid compositions for refrigerating machine, a larger proportion of the refrigeration oils is present in the composition than the weight ratio of the refrigeration oils to the hydrofluorocarbons of 1:50.

### 3. Method for Inhibiting Formation of Adhered Materials and Agent for Inhibiting Formation of Adhered Materials

Adhered materials of which formation is inhibited by the refrigeration oils and the working fluid compositions for refrigerating machine of the present invention are one of the following compounds:
1) The compound formed by deteriorating a refrigeration oil by heat, air and water in a refrigeration cycle.
2) The process chemicals, such as drawing oils, cutting fluids, anticorrosive oils, press oil and cleaning fluid, each of which is used during production and assembly of a refrigerating machine.
3) The compound formed by deteriorating these process chemicals by heat, air and water in a refrigeration cycle.

In the present invention, by using a refrigeration oil containing a compound represented by the formula (1) described above, the adhered materials in a refrigeration cycle, at such places as capillary tubes can be remarkably inhibited. Therefore, the present invention can provide a method for inhibiting formation of the adhered materials in the refrigeration cycle characterized by using the refrigeration oil of the present invention. Additionally, the present invention can provide an agent for inhibiting formation of the adhered materials in a refrigeration cycle, comprising the compound represented by the formula (1) as an active ingredient.

The present invention will be described in more detail by the following working examples, without intending to restrict the scope of the present invention thereto.

The ester base oils, the compounds represented by formula (1), and the adhered materials usable in the working examples are as follows.

### Ester Base Oil 1

Ester formed between pentaerythritol (1.0 mol) and a mixed acid of 2-ethylhexanoic acid (1.96 mol) and 3,5,5-trimethylhexanoic acid (2.07 mol)
Dynamic viscosity at 40°C (hereinafter simply referred to as "Vis 40"): 70.2 mm²/sec.
Dynamic viscosity at 100°C (hereinafter simply referred to as "Vis 100"): 8.63 mm²/sec.
Acid value: 0.01 mg KOH/g.
Hydroxyl value: 2.4 mg KOH/g.
Iodine value: Not more than 1.0 I g/100 g.

### Ester Base Oil 2

Ester formed between trimethylolpropane (1.0 mol) and 3,5,5-trimethylhexanoic acid (3.0 mol)
Vis 40: 50.19 mm²/sec.
Vis 100: 7.14 mm²/sec.
Acid value: Less than 0.01 mg KOH/g.
Hydroxyl value: 0.8 mg KOH/g.
Iodine value: Not more than 1.0 I g/100 g.

### Compounds Represented by Formula (1)

- A:: MeO(PO)₂₄(EO)₆H
- B:: MeO(PO)₂₄(EO)₆Me
- C:: C₄O(EO/PO = 1.6/1.6)H, EO/PO being a random copolymer, wherein C₄ is linear butyl group.
- D:: C₁₂O(EO)₆(PO)₂H, wherein C₁₂ is linear dodecyl group.
- E:: C₁₂O(PO)₂(EO)₆H, wherein C₁₂ is linear dodecyl group.
- F:: C₁₂O(EO/PO = 5/2)H, EO/PO being a random copolymer, wherein C₁₂ is linear dodecyl group.
- G:: C₁₃O(PO)₅(EO)₈H, wherein C₁₃ is branched tridecyl group.
- H:: C₁₃O(PO)₇(EO)₁₁H, wherein C₁₃ is branched tridecyl group.

Incidentally, in the above compounds, Me is methyl group, EO is oxyethylene group, and PO is oxypropylene group. Also, the molar numbers of the oxyethylene group and the oxypropylene group in the above compounds are those of an average composition.
Adhered Material A: Polybutene-based synthetic metal working oils;
   Vis 40: 300 mm²/sec.
Adhered Material B: Mineral oil-based metal working oils;
   Vis 40: 20 mm²/sec.
Adhered Material C: Deteriorated product of Adhered Material A.

Here, the deteriorated product was prepared by heating Adhered Material A at a temperature of 270°C for 3 minutes in an air stream supplied at 8 ml/minute using a hot tube test apparatus "HT-201" (manufactured by Komatsu Setsubi).

### Example 1

In order to evaluate the ability for inhibition of adhered materials of the working fluid compositions for refrigerating machines of the present invention, the solubilities of the adhered materials in the working fluid compositions for refrigerating machines were tested by the following methods.

Specifically, 1,1,1,2-tetrafluoroethane (HFC134a) and an oil to be tested are mixed in a weight ratio of 95:5 using a testing device for compatibility with a hydrofluorocarbon, and a temperature range in which the hydrofluorocarbon uniformly dissolves in the range of from 0° to 60°C is determined by gross examination. Incidentally, the weight ratio and temperature conditions are for the inlet of the capillary tube at which the materials are most easily adhered in the operation of the refrigerating machines.

Here, a given amount of Compound A, B, C, D, E, F, G, or H represented by the formula (1) shown in Table 1 or 2 was added, based on 100 parts by weight of Ester Base Oil 1 or 2, to prepare a refrigeration oil. One part by weight of Adhered Material A was mixed with 100 parts by weight of the refrigeration oil, to prepare an oil to be tested. In addition, a volume resistivity at 25°C of the prepared refrigeration oil was measured, the volume resistivity being measured by a method according to JIS C2101 in a thermostat (manufactured by Nagano Science Corporation) set at 25°C. In the above measurement, an electrode cell for liquids "ELECTRODE (TYPE) OBE-2" (manufactured by Soken Electric Corporation) and a resistance meter "R8340A" (manufactured by Advantest) were employed. The results are shown in Tables 1 and 2.

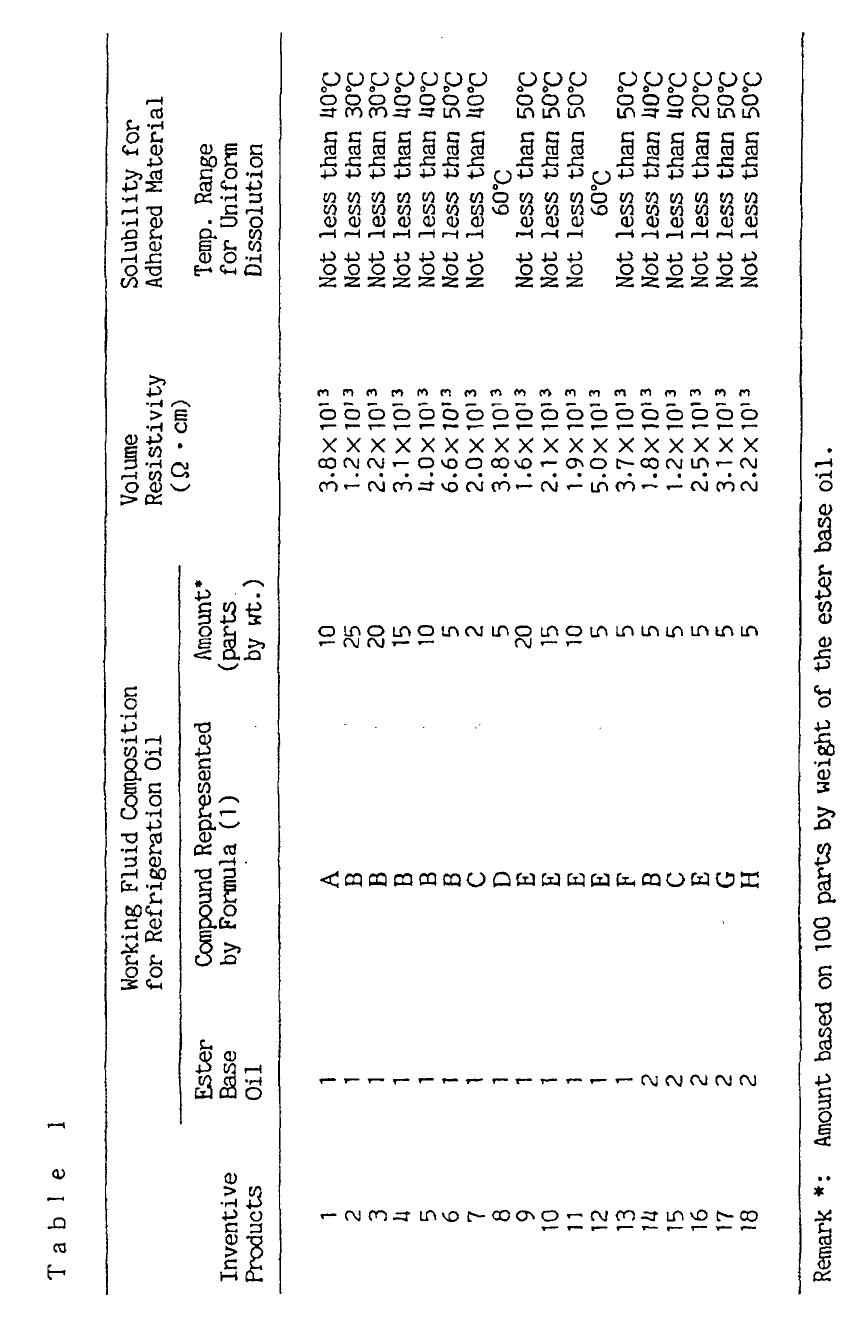

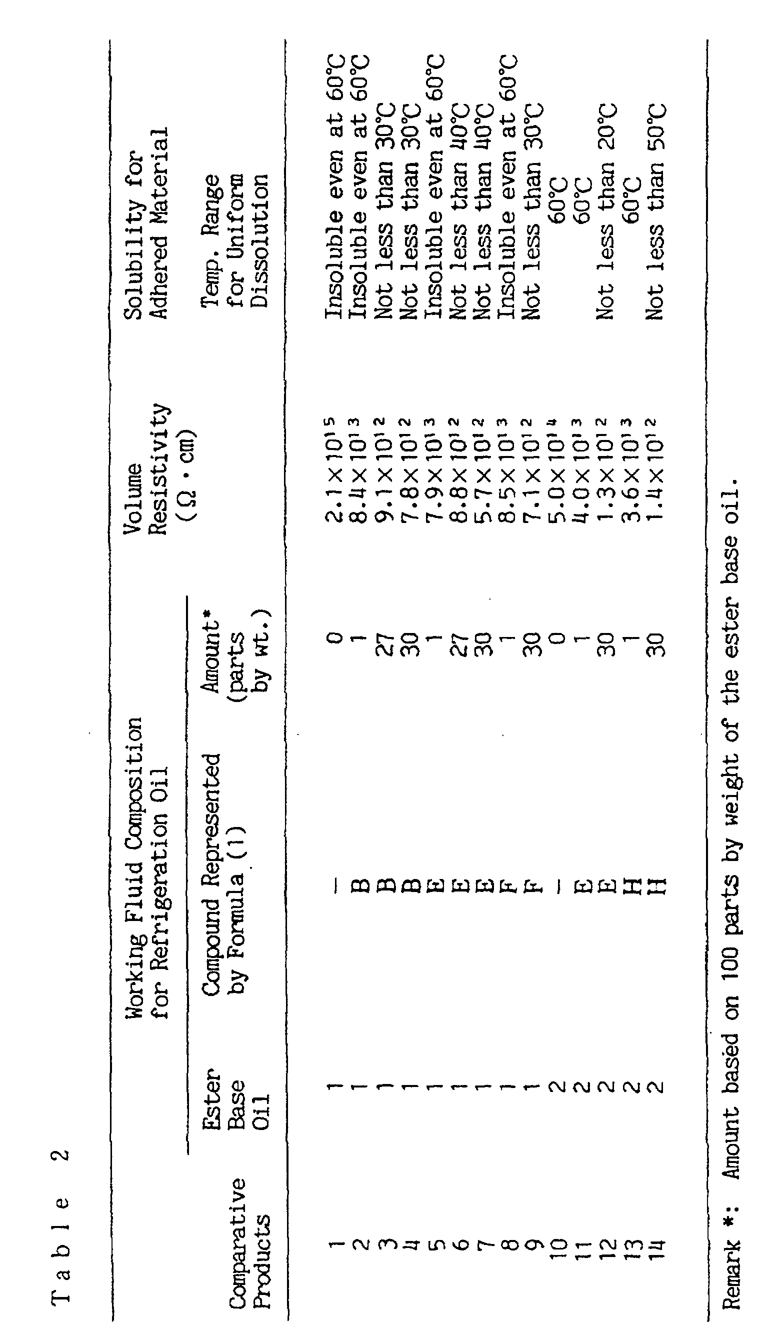

As shown in Tables 1 and 2, in cases where each of Compounds A to H is added in an amount of not less than 2 parts by weight, based on 100 parts by weight of Ester Base Oil 1 or 2, the temperature for uniform dissolution is considerably lower than that of Ester Base Oil 1 or 2 alone. Therefore, effects of inhibition of the adhered materials can be observed when adding Compounds A to H each being represented by the formula (1) in an amount of 2 parts by weight or more. On the other hand, when the amount of Compound A to H represented by the formula (1) exceeds 25 parts by weight, based on 100 parts by weight of Ester Base Oil 1 or 2, the volume resistivity is less than 1 × 10¹³ (Ω•cm). Therefore, the preferred amount of Compound represented by the formula (1) is from 2 to 25 parts by weight, based on 100 parts by weight of the ester base oil.

### Example 2

A refrigeration oil was prepared by adding 11.11 parts by weight of Compound B represented by the formula (1) or 2.04 parts by weight of Compound C represented by the formula (1) to 100 parts by weight of Ester Base Oil 1. Five parts by weight of Adhered Material B were added to 100 parts by weight of the resulting refrigeration oil, to prepare each of oils to be tested.

Two-hundred and ten grams of each oil to be tested was sealed in a 200 W reciprocating-type compression machine equipped with a capillary tube, and thereafter, 70 g of 1,1,1,2-tetrafluoroethane (HFC134a) was sealed, and the machine was operated for consecutive 200 hours under the condition that the temperature at the upper portion of the reciprocating-type compressing machine was 110°C. After the 200-hour operation, the adhered materials on the capillary tube were observed by gross examination. The results thereof are shown in Table 3.

The inventive product shows considerably a small amount of the adhered materials on the capillary tube when compared with Comparative Product 15 where no compounds represented by the formula (1) are included.

**Table 3**

| (200 W-reciprocating type, Adhered Material B) | | | | |
|---|---|---|---|---|
| | Ester Base Oil No. | Compound Represented by Formula (1) | Amount* (Parts by Weight) | Adhered Material Formed on Capillary Tube |
| Inventive Product 19 | 1 | B | 11.11 | None |
| | | | | |
| Inventive Product 20 | 1 | C | 2.04 | None |
| | | | | |
| Comparative Product 15 | 1 | - | - | Present |

| | | | | |
|---|---|---|---|---|
| Remark *: Amount added based on 100 parts by weight of the ester base oil. | | | | |

### Example 3

A refrigeration oil was prepared by adding 2.04 parts by weight of Compound C represented by the formula (1) to 100 parts by weight of Ester Base Oil 2. Five parts by weight of Adhered Material A were added to 100 parts by weight of the resulting refrigeration oil, to prepare each of oils to be tested.

Three-hundred and ten grams of each oil to be tested was sealed in a 150 W reciprocating-type compression machine equipped with a capillary tube, and thereafter, 100 g of 1,1,1,2-tetrafluoroethane (HFC134a) was sealed, and the machine was operated for consecutive 200 hours under the condition that the temperature at the upper portion of the reciprocating-type compressing machine was 110°C. After the 200-hour operation, the adhered materials on the capillary tube were observed by gross examination. The results thereof are shown in Table 4.

The inventive product shows considerably a small amount of the adhered materials on the capillary tube when compared with Comparative Product 16 where no compounds represented by the formula (1) are included.

**Table 4**

| (150 W-reciprocating type, Adhered Material A) | | | | |
|---|---|---|---|---|
| | Ester Base Oil No. | Compound Represented by Formula (1) | Amount* (Parts by Weight) | Adhered Material Formed on Capillary Tube |
| Inventive Product 21 | 2 | C | 2.04 | None |
| | | | | |
| Comparative Product 16 | 2 | - | - | Present |

| | | | | |
|---|---|---|---|---|
| Remark *: Amount added based on 100 parts by weight of the ester base oil. | | | | |

### Example 4

A refrigeration oil was prepared by adding 11.11 parts by weight of Compound B represented by the formula (1) to 100 parts by weight of Ester Base Oil 2. Five parts by weight of Adhered Material B were added to 100 parts by weight of the resulting refrigeration oil, to prepare each of oils to be tested.

Three-hundred and seventy grams of each oil to be tested was sealed in a 1 kW rotary-type compression machine equipped with a capillary tube, and thereafter, 380 g of 1,1,1,2-tetrafluoroethane (HFC134a) was sealed, and the machine was operated for consecutive 200 hours under the condition that the temperature at the upper portion of the rotary-type compressing machine was 110°C. After the 200-hour operation, the adhered materials on the capillary tube were observed by gross examination. The results thereof are shown in Table 5.

The inventive product shows considerably a small amount of the adhered materials on the capillary tube when compared with Comparative Product 17 where no compounds represented by the formula (1) are included.

**Table 5**

| (1kW-rotary type, Adhered Material B) | | | | |
|---|---|---|---|---|
| | Ester Base Oil No. | Compound Represented by Formula (1) | Amount* (Parts by Weight) | Adhered Material Formed on Capillary Tube |
| Inventive Product 22 | 2 | B | 11.11 | None |
| | | | | |
| Comparative Product 17 | 2 | - | - | Present |

| | | | | |
|---|---|---|---|---|
| Remark *: Amount added based on 100 parts by weight of the ester base oil. | | | | |

### Example 5

A refrigeration oil was prepared by adding 2.04 parts by weight of Compound C represented by the formula (1) to 100 parts by weight of Ester Base Oil 1. Five parts by weight of Adhered Material C was added to 100 parts by weight of the resulting refrigeration oil, to prepare each of oils to be tested.

Two-hundred and ten grams of each oil to be tested was sealed in a 200 W reciprocating-type compression machine equipped with a capillary tube, and thereafter, 70 g of 1,1,1,2-tetrafluoroethane (HFC134a) was sealed, and the machine was operated for consecutive 200 hours under the condition that the temperature at the upper portion of the reciprocating-type compressing machine was 110°C, After the 200-hour operation, the adhered materials on the capillary tube were observed by gross examination. The results thereof are shown in Table 6.

The inventive product shows considerably a small amount of the adhered materials on the capillary tube when compared with Comparative Product 18 where no compounds represented by the formula (1) are included.

**Table 6**

| (200 W-reciprocating type, Adhered Material C) | | | | |
|---|---|---|---|---|
| | Ester Base Oil No. | Compound Represented by Formula (1) | Amount* (Parts by Weight) | Adhered Material Formed on Capillary Tube |
| Inventive Product 23 | 1 | C | 2.04 | None |
| | | | | |
| Comparative Product 18 | 1 | - | - | Present |

| | | | | |
|---|---|---|---|---|
| Remark *: Amount added based on 100 parts by weight of the ester base oil. | | | | |

### INDUSTRIAL APPLICABILITY

According to the present invention, since a particular ether compound is added to the ester base oil, the resulting refrigeration oils and working fluid compositions for refrigerating machines exhibit remarkably good inhibition of the adhered materials formed on the capillary tube or the refrigerating cycle.

## Claims

1. A refrigeration oil having a volume resistivity at 25°C of not less than 1 × 10¹³ Ω•cm, comprising:
(a) an ester base oil, and
(b) a compound represented by the formula (1):
R¹O(EO)ₘ(PO)ₙR² (1)
wherein R¹ is a hydrocarbon group having 1 to 36 carbon atoms; R² is hydrogen atom, a hydrocarbon group having 1 to 36 carbon atoms, or an acyl group having 1 to 24 carbon atoms; EO is oxyethylene group; PO is oxypropylene group; and m is a number of from 0 to 50, and n is a number of from 0 to 50, with proviso that the sum of m and n is from 1 to 100,
wherein the amount of said (b) is 2 to 25 parts by weight, based on 100 parts by weight of said (a).

2. The refrigeration oil according to claim 1, wherein the concentration of the compound represented by the formula (1) in the refrigeration oil is from 1 to 20% by weight.

3. The refrigeration oil according to claim 1 or 2, wherein the ester base oil is formed between (i) a saturated, dihydric to hexahydric, aliphatic polyhydric alcohol having 2 to 10 carbon atoms and (ii) a linear or branched, saturated, aliphatic monocarboxylic acid having 2 to 9 carbon atoms or a derivative thereof.

4. The refrigeration oil according to any one of claims 1 to 3, wherein the ester base oil is formed between (i) a saturated, dihydric to tetrahydric, aliphatic polyhydric alcohol having 2 to 10 carbon atoms and (ii) a linear or branched, saturated, aliphatic monocarboxylic acid having 5 to 9 carbon atoms or a derivative thereof.

5. The refrigeration oil according to any one of claims 1 to 4, wherein R¹ is a hydrocarbon group having 1 to 14 carbon atoms; and R² is hydrogen atom or a hydrocarbon group having 1 to 14 carbon atoms.

6. The refrigeration oil according to any one of claims 1 to 5, wherein the amount of said (b) is 2 to 5 parts by weight, based on 100 parts by weight of said (a).

7. A working fluid composition for refrigerating machines comprising the refrigeration oil as defined in any one of claims 1 to 6 and one or more hydrofluorocarbons.

8. A method for inhibiting formation of an adhered material in a refrigeration cycle comprising using the refrigeration oils as defined in any one of claims 1 to 6.

9. Use of a compound represented by the formula (1) as an active ingredient:
R¹O(EO)ₘ(PO)ₙR² (1)
wherein R¹ is a hydrocarbon group having 1 to 36 carbon atoms; R² is hydrogen atom, a hydrocarbon group having 1 to 36 carbon atoms, or an acyl group having 1 to 24 carbon atoms; EO is oxyethylene group; PO is oxypropylene group; and m is a number of from 0 to 50, and n is a number of from 0 to 50, with proviso that the sum of m and n is from 1 to 100 for inhibiting formation of an adhered material in a refrigeration cycle.

## Patentansprüche

1. Kühlöl mit einem spezifischen Volumenwiderstand bei 25°C von nicht weniger als 1 x 10¹³ Ω·cm, umfassend:
(a) ein Öl auf Esterbasis, und
(b) eine durch die Formel (1) dargestellte Verbindung:
R¹O(EO)ₘ(PO)ₙR² (1)
wobei R¹ eine Kohlenwasserstoffgruppe mit 1 bis 36 Kohlenstoffatomen ist; R² ein Wasserstoffatom, eine Kohlenwasserstoffgruppe mit 1 bis 36 Kohlenstoffatomen, oder eine Acylgruppe mit 1 bis 24 Kohlenstoffatomen ist; EO eine Oxyethylengruppe ist; PO eine Oxypropylengruppe ist; und m eine Zahl von 0 bis 50 ist, und n eine Zahl von 0 bis 50 ist, unter der Massgabe, dass die Summe von m und n 1 bis 100 beträgt,
wobei die Menge von (b) 2 bis 25 Gew.-Teile, in bezug auf 100 Gew.-Teile von (a), beträgt.

2. Kühlöl gemäss Anspruch 1, wobei die Konzentration der durch die Formel (1) dargestellten Verbindung in dem Kühlöl 1 bis 20 Gew.% beträgt.

3. Kühlöl gemäss Anspruch 1 oder 2, wobei das Öl auf Esterbasis zwischen (i) einem gesättigten, zwei- bis sechswertigen, aliphatischen mehrwertigen Alkohol mit 2 bis 10 Kohlenstoffatomen und (ii) einer geradkettigen oder verzweigten, gesättigten, aliphatischen Monocarbonsäure mit 2 bis 9 Kohlenstoffatomen oder einem Derivat hiervon gebildet wird.

4. Kühlöl gemäss einem der Ansprüche 1 bis 3, wobei das Öl auf Esterbasis gebildet wird zwischen (i) einem gesättigten, zwei- bis vierwertigen, aliphatischen mehrwertigen Alkohol mit 2 bis 10 Kohlenstoffatomen und (ii) einer geradkettigen oder verzweigten, gesättigten, aliphatischen Monocarbonsäure mit 5 bis 9 Kohlenstoffatomen oder einem Derivat hiervon.

5. Kühlöl gemäss einem der Ansprüche 1 bis 4, wobei R¹ eine Kohlenwasserstoffgruppe mit 1 bis 14 Kohlenstoffatomen ist; und R² ein Wasserstoffatom oder eine Kohlenwasserstoffgruppe mit 1 bis 14 Kohlenstoffatomen ist.

6. Kühlöl gemäss einem der Ansprüche 1 bis 5, wobei die Menge von (b) 2 bis 5 Gew.-Teile, in bezug auf 100 Gew.-Teile von (a), beträgt.

7. Treibmittelzusammensetzung für Kühlgeräte, umfassend das Kühlöl gemäss einem der Ansprüche 1 bis 6 und ein oder mehrere Fluorkohlenwasserstoffe.

8. Verfahren zur Inhibierung der Bildung von einem adhärierenden Material in einem Kühlzyklus, umfassend die Verwendung der Kühlöle gemäss einem der Ansprüche 1 bis 6.

9. Verwendung einer durch die Formel (1) dargestellten Verbindung als aktivem Inhaltsstoff:
R¹O(EO)ₘ(PO)ₙR² (1)
wobei R¹ eine Kohlenwasserstoffgruppe mit 1 bis 36 Kohlenstoffatomen ist; R² ein Wasserstoffatom, eine Kohlenwasserstoffgruppe mit 1 bis 36 Kohlenstoffatomen, oder eine Acylgruppe mit 1 bis 24 Kohlenstoffatomen ist; EO eine Oxyethylengruppe ist; PO eine Oxypropylengruppe ist; und m eine Zahl von 0 bis 50 ist, und n eine Zahl von 0 bis 50 ist, unter der Massgabe, dass die Summe von m und n 1 bis 100 beträgt, zur Inhibierung der Bildung von einem adhärierenden Material in einem Kühlzyklus.

## Revendications

1. Huile pour machine frigorifique présentant une résistivité volumique à 25°C qui n'est pas inférieure à 1 x 10¹³ Ω•cm, comprenant :
(a) une huile à base d'ester, et
(b) un composé représenté par la formule (1) :
R¹O(EO)ₘ(PO)ₙR² (1)
dans laquelle R¹ est un groupement hydrocarbure comportant 1 à 36 atomes de carbone, R² est un atome d'hydrogène, un groupement hydrocarbure comportant 1 à 36 atomes de carbone, ou bien un groupement acyle comportant 1 à 24 atomes de carbone, EO est un groupement oxyéthylène, PO est un groupement oxypropylène, et m est un nombre de 0 à 50, et n est un nombre de 0 à 50, à la condition que la somme de m et de n soit de 1 à 100,
dans laquelle la quantité dudit (b) est de 2 à 25 parties en poids sur la base de 100 parties en poids de ladite (a).

2. Huile pour machine frigorifique selon la revendication 1, dans laquelle la concentration en composé représentée par la formule (1) dans l'huile pour machine frigorifique est de 1 à 20 % en poids.

3. Huile pour machine frigorifique selon la revendication 1 ou 2, dans laquelle l'huile à base d'ester est formée entre (i) un alcool polyhydrique aliphatique, dihydrique à hexahydrique, saturé comportant 2 à 10 atomes de carbone et (ii) un acide monocarboxylique aliphatique, saturé, linéaire ou ramifié comportant 2 à 9 atomes de carbone ou un dérivé de celui-ci.

4. Huile pour machine frigorifique selon l'une quelconque des revendications 1 à 3, dans laquelle l'huile à base d'ester est formée entre (i) un alcool polydydrique aliphatique, dihydrique à tétrahydrique, saturé comportant 2 à 10 atomes de carbone et (ii) un acide monocarboxylique aliphatique, saturé, linéaire ou ramifié, comportant 5 à 9 atomes de carbone ou un dérivé de celui-ci.

5. Huile pour machine frigorifique selon l'une quelconque des revendications 1 à 4, dans laquelle R¹ est un groupement hydrocarbure comportant 1 à 14 atomes de carbone, et R² est un atome d'hydrogène ou un groupement hydrocarbure comportant 1 à 14 atomes de carbone.

6. Huile pour machine frigorifique selon l'une quelconque des revendications 1 à 5, dans laquelle la quantité dudit (b) est de 2 à 5 parties en poids, sur la base de 100 parties en poids de ladite (a).

7. Composition de fluide de travail destinée à des machines frigorifiques comprenant l'huile pour machine frigorifique telle que définie dans l'une quelconque des revendications 1 à 6 et un ou plusieurs hydrocarbures fluorés.

8. Procédé destiné à empêcher à formation d'un matériau adhérent dans un cycle de réfrigération comprenant l'utilisation des huiles pour machine frigorifique telles que définies dans l'une des revendications 1 à 6.

9. Utilisation d'un composé représenté par la formule (1) en tant que principe actif :
R¹O(EO)ₘ(PO)ₙR² (1)
dans laquelle R¹ est un groupement hydrocarbure comportant 1 à 36 atomes de carbone, R² est un atome d'hydrogène, un groupement hydrocarbure comportant 1 à 36 atomes de carbone, ou un groupement acyle comportant 1 à 24 atomes de carbone, EO est un groupement oxyéthylène, PO est un groupement oxypropylène, et m est un nombre de 0 à 50, et n est un nombre de 0 à 50, à la condition que la somme de m et de n soit de 1 à 100, en vue d'empêcher la formation d'un matériau adhérant dans un cycle de réfrigération.
